# EUROPEAN PATENT SPECIFICATION

(11) **EP 4 007 950 B1**
(45) Date of publication and mention of the grant of the patent: **26.02.2025**
(21) Application number: 20849758.6
(22) Date of filing: 27.05.2020
(51) Int. Cl.: G09B 5/02, G06F 40/103, G06F 40/106, G09B 17/02

(54) **METHODS AND DEVICES FOR PROVIDING DYSLEXIC READABLE IMAGES**
VERFAHREN UND VORRICHTUNGEN ZUR BEREITSTELLUNG VON DURCH LEGASTHENIKER LESBAREN BILDERN
PROCÉDÉS ET DISPOSITIFS DE FOURNITURE D'IMAGES DE LISIBLES PAR LES DYSLEXIQUES

(30) Priority: 02.08.2019 US 201962922197 P; 12.03.2020 US 202062988729 P; 05.05.2020 US 202016867388
(43) Date of publication of application: 08.06.2022
(73) Proprietor: Summerbell, Hillary Patience, Lewes, DE 19958 (US)
(72) Inventor: Summerbell, Hillary Patience, Lewes, DE 19958 (US)
(74) Representative: Kuhnen & Wacker Patent- und Rechtsanwaltsbüro PartG mbB
(86) International application number: PCT/US2020/034640
(87) International publication number: WO 2021/025753

(56) References cited:
- US-A- 5 892 592
- US-A1- 2002 091 713
- US-A1- 2005 142 522
- US-A1- 2011 111 377
- US-A1- 2015 042 662
- JOHN LAWRENCE INMAN : "Another way to understand gifted and dyslexic: Hypothetical transformation via an indigenous worldview", DISSERTATION OR THESIS, 1 January 2015 (2015-01-01), pages 1 - 202, XP055889922

## Description

### RELATED APPLICATIONS

It is believed that the present application claims priority to U.S. provisional application 62/922,197 (the "'I97 Application) filed August 14, 2019 and U.S. provisional application 62/988,729 filed March 12, 2020 (the "729 Application).

### FIELD OF INVENTION

### BACKGROUND OF THE INVENTION

This section introduces aspects that may be helpful to facilitate a better understanding of the described invention(s). Accordingly, the statements in this section are to be read in this light and are not to be understood as admissions about what is, or what is not, in the prior art.

For an individual with dyslexia, it is difficult, if not impossible, to read text (letters, words, numbers, symbols) as it is currently presented in a conventional format. For example, conventional text is displayed substantially on, or between, one or more straight, parallel horizontal lines (i.e., a "linear" format). This format is used to present text in books, magazines, signs, etc. regardless of language. Even if such lines are not visible, the text is still shown spaced substantially on, or from one or more text-less boundaries as if the lines were visible. This conventional, linear format is very difficult for a person with dyslexia because they are unable to break up words or syllables of words or text of any kind in a linear format into separate components, cannot sound out syllabic components of a word, or break up a word or a math equation in a linear format. To a dyslexic, words, sentences and paragraphs in a linear format all appear as one single, combined image.

This problem exists whether the text is represented on a piece of paper, computer screen or printed page. The conventional ways and means of processing information (e.g., text) using two-dimensional, linear lines, boundaries and paragraphs adversely affects many aspects of the dyslexic's daily life.

For example, when a dyslexic sees a word in a linear format they do not recognize or multiple lines of text, a dyslexic may go "blank" (known as "word blindness"). This word blindness may also cause the dyslexic problems with following a sequence of instructions, such as a recipe. Further, dyslexics have a hard time remembering numbers or letters in their proper sequence in a linear format and are challenged performing precise math calculations.

Conservative estimates are that dyslexia affects 10% of the world's population, and perhaps up to 17%.

Accordingly, there is a need for better methods and systems that present text so that the text can be read by people with dyslexia.

Prior art is disclosed in document US 2002/091713 A1. There is discloses a text processor for a text enhancement method and apparatus for the presentation of text for improved human reading. The method includes extracting text specific attributes from machine readable text and varying the text presentation in accordance with the attributes.

The preferred embodiment of the method: extracts parts of speech and punctuation from a sentence, applies folding rules which use the parts of speech to determine folding points, and presents text segments each on a new line and having a determined horizontal displacement based on the text specific attributes. One method displays text over bent curves having a shape based on text content. Another method includes displaying relative text position within a hierarchy using alternating vertically and horizontally tiled planes. Another method supports reading text segments across opposed pages without waiting for paging. Yet another method displays text to allow reading from bottom to top as though from front to back. Still another method displays words in colors reflecting the relationships between the words and the larger text segments of which they are apart.

### SUMMARY OF THE INVENTION

This section introduces aspects that may be helpful to facilitate a better understanding of the described invention(s). Accordingly, the statements in this section are to be read in this light and are not to be understood as admissions about what is, or what is not, in the prior art.

The present invention relates to a method for providing a dyslexic readable image as defined in independent claim 1 and to a device for providing a dyslexic readable image as defined in independent claim 8.

For an individual with dyslexia, it is difficult, if not impossible, to read text (letters, words, numbers, symbols) as it is currently presented in a conventional format. For example, conventional text is displayed substantially on, or between, one or more straight, parallel horizontal lines (i.e., a "linear" format). This format is used to present text in books, magazines, signs, etc. regardless of language. Even if such lines are not visible, the text is still shown spaced substantially on, or from one or more text-less boundaries as if the lines were visible. This conventional, linear format is very difficult for a person with dyslexia because they are unable to break up words or syllables of words or text of any kind in a linear format into separate components, cannot sound out syllabic components of a word, or break up a word or a math equation in a linear format. To a dyslexic, words, sentences and paragraphs in a linear format all appear as one single, combined image.

This problem exists whether the text is represented on a piece of paper, computer screen or printed page. The conventional ways and means of processing information (e.g., text) using two-dimensional, linear lines, boundaries and paragraphs adversely affects many aspects of the dyslexic's daily life.

For example, when a dyslexic sees a word in a linear format they do not recognize or multiple lines of text, a dyslexic may go "blank" (known as "word blindness"). This word blindness may also cause the dyslexic problems with following a sequence of instructions, such as a recipe. Further, dyslexics have a hard time remembering numbers or letters in their proper sequence in a linear format and are challenged performing precise math calculations.

Conservative estimates are that dyslexia affects 10% of the world's population, and perhaps up to 17%.

Accordingly, there is a need for better methods and systems that present text so that the text can be read by people with dyslexia.

### BRIEF DESCRIPTION OF THE DRAWINGS

- Figures 1 A to 1C: depict, among other things, an exemplary inventive image provided in accordance with an embodiment of the invention.
- Figures 2A to 2C: depict, among other things, another exemplary inventive image provided in accordance with an embodiment of the invention.
- Figures 3 A to 3F: depict, among other things, additional, exemplary inventive images provided in accordance with embodiments of the invention.
- Figures 4A to 4C: depict, among other things, yet further additional, exemplary inventive images provided in accordance with an embodiment of the invention.
- Figure 5: depicts a simplified block diagram of a technique for providing inventive images that presents or displays text in a non-linear format to substantially improve the ability of a dyslexic to read and comprehend the so presented/displayed text.
- Figures 6A and 6B: depict an exemplary linear formatted image (Figure 6A) converted to an inventive, non-linear formatted image (Figure 6B).

### DETAILED DESCRIPTION, WITH EXAMPLES

Exemplary embodiments for providing dyslexic readable images are described herein and are shown by way of example in the drawings. Throughout the following description and drawings, like reference numbers/characters refer to like elements. It should be understood that although specific embodiments are discussed herein, the scope of the disclosure is not limited to such embodiments. On the contrary, it should be understood that the embodiments discussed herein are for illustrative purposes, and that modified and alternative embodiments that otherwise fall within the scope of the disclosure are contemplated. It should also be noted that one or more exemplary embodiments may be described as a process or method (the words "method" may be used interchangeably with the word "process" herein). Although a process/method may be described as sequential, it should be understood that such a process/method may be performed in parallel, concurrently or simultaneously. In addition, the order of each step within a process/method may be re-arranged. A process/method may be terminated when completed, and may also include additional steps not included in a description of the process/method if, for example, such steps are known by those skilled in the art. It should be understood that when an system or device, or a component or element of a system or device, is referred to, or shown in a figure, as being "connected" to (or other tenses of connected) another system, device (or component or element of a system or device) such systems, devices, components or elements may be directly connected, or may use intervening components or elements to aid a connection. In the latter case, if the intervening systems, devices, components or elements are well known to those in the art they may not be described herein or shown in the accompanying figures for the sake of clarity. It should be understood that, as used herein, the designations "first", "second", "third", "fourth" etc., is purely to distinguish one distance from another and does not indicate an importance, priority or status. In fact, the distances could be re-designated (i.e., re-numbered) and it would not affect the methods or devices provided by the present invention.

As used herein, the term "and/or" includes any and all combinations of one or more of the associated listed items. As used herein, the singular forms "a," "an" and "the" are intended to include the plural form, unless the context and/or common sense indicates otherwise. It should be understood that the terms "comprises", "comprising,", "includes" and/or "including", when used herein, specify the presence of stated features, steps, operations, elements, and/or components, but do not preclude the presence or addition of one or more other features, steps, operations, elements, components, and/or combinations thereof. As used herein the term "operable to" means "functions to" unless the context, common sense or knowledge of one skilled in the art indicates otherwise. As used herein "dyslexic" means an individual who suffers from dyslexia. As used herein the word "text" may refer to a single grammatical letter, word or symbol, a sentence, phrase, and/or a mathematic number, symbol or operator, for example. Together a plurality of text may form a paragraph or mathematical equation, for example. Further, it should be understood that "text" that comprises a grammatical letter, word or symbol may further comprise a character in a language. As used herein the phrases "embodiment" or "exemplary" mean a non limiting example of the present invention. Though the embodiments described herein and shown in the figures may depict certain geometric shapes, it should be understood that these shapes are merely exemplary, and, accordingly, other shapes may be substituted for the so described and depicted shapes.

Still further, it should be understood that an electronic device that completes features and functions of embodiments of the invention may include a web browser that is a part of an interface or one or more applications (often referred to herein as an "APP" or "APPS") that have been installed into, or downloaded onto, an electronic device. An "APP" may include "content" (e.g., text, audio and video files), signaling and configuration files. For the sake of convenience and not limitation, the terms "APP" or "application" are used herein to refer to any application, but use of such a term also includes a reference to any file or data. In one embodiment, an APP to be downloaded onto a device may also reside or be stored on one or more hardware devices, such as a server in whole and/or in part, the later indicating that the APP may be distributed among, and by, a number of devices (servers). An APP may be downloaded to a user's device from an APP server (or servers as the case may be) or have been otherwise provided and installed on such a server. A given user device may have a need for one or more of the APPs installed on a server. Accordingly, it should be understood that each of the embodiments described herein includes protocols, necessary hardware, software and firmware resident on a user device for transmitting and receiving (i.e., "transceiving") an APP, content and/or content identification information relating to the APP from/to a server and vice-versa. It should be understood that depending on the content to be transmitted, an APP may be installed directly on a user device or may be downloaded from a server by initiating a request to a server to receive a local copy of the APP. When a discussion herein describes transmissions from a user device to a server, or vice-versa, it should be understood that a web browser and/or APP may be used to complete such transmissions and receptions.

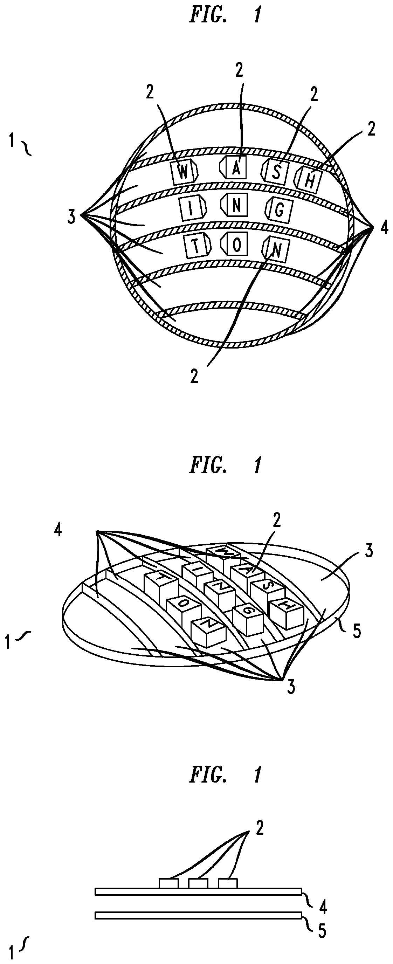

Referring now to Figures 1 A to 1C there is depicted an exemplary inventive image 1 provided in accordance with an embodiment of the invention. As shown the image 1 may comprise a surface or background portion 3 with one or more positioned non-linear (i.e., curved) boundaries 4a to 4n (where "n" represents the last boundary) (e.g., non-linear lines) for dividing the image into textual locations and one or more textual objects 2a-2n (e.g., 3-dimensional text) representing text positioned on the portion such that each object is at a same first distance from the one or more positioned non-linear boundaries 4a to 4n.

As noted previously, the one or more objects 2a to 2n may comprise one or more grammatical letters, words, numbers, and symbols, for example (i.e., "text"). Still further, in one embodiment, each of the objects 2a to 2n (e.g., grammatical letters, words, numbers, and symbols) may comprise text presented in a block lettering format. In one embodiment the first distance may comprises an equal distance from the one or more positioned non-linear boundaries 4a to 4n that are located above and below the one or more objects 2a to 2n to the objects 2a to 2n. Alternatively, first distance may be an equal distance from the non-linear boundaries 4a to 4ny that is located above or below the one or more objects 2a to 2n to the objects 2a to 2n. Accordingly, the objects 2a to 2n may appear to "follow" the positioned non-linear boundaries 4a to 4n. By so positioning the textual objects, the image 1 effectively visually separates text (e.g., a word or phrase and/or elements thereof (e.g., letters) from another word or phrase) so that a dyslexic can read and understand the text represented by the image 1. As depicted in Figures 1A and IB the entire image 1 may be formed as a circular or oval image. Accordingly, when the entire image is reproduced it may be reproduced as a circular or oval image. Still further, the image 1 may optionally comprise a 3D border 5 that corresponds to the geometric shape of the image 1, in this case a circular or oval shape. The border 5 may appear as a circumference or edge of the image 1.

Though the objects 2a to 2n may be a first distance from each of the one or more positioned boundaries 4a to 4n, the positioned boundaries 4a to 4n themselves may each be separated or positioned from one another by a second distance. In one embodiment, the first distance may be substantially 1/3 of the second distance. In yet another embodiment, one or more of the one or more positioned boundaries 4a to 4n may be located above or below each of the one or more objects 2a to 2n at a third distance from each of the one or more objects 2a to 2n, while another one of the one or more positioned boundaries is located below or above the one or more objects and is at a fourth distance, where the third and fourth distances maybe different from each other and may vary from a second distance by up to 10%. Alternatively, the third and fourth distances may be the same distance. Though the exemplary images shown in the figures depict continuous boundaries it should be understood that the boundaries may comprise one or more undulations.

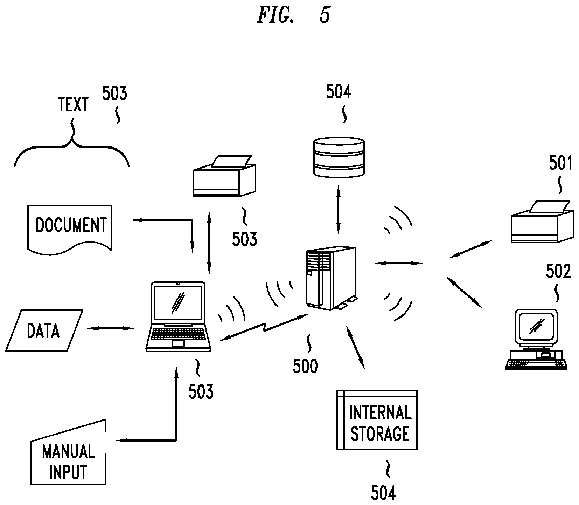

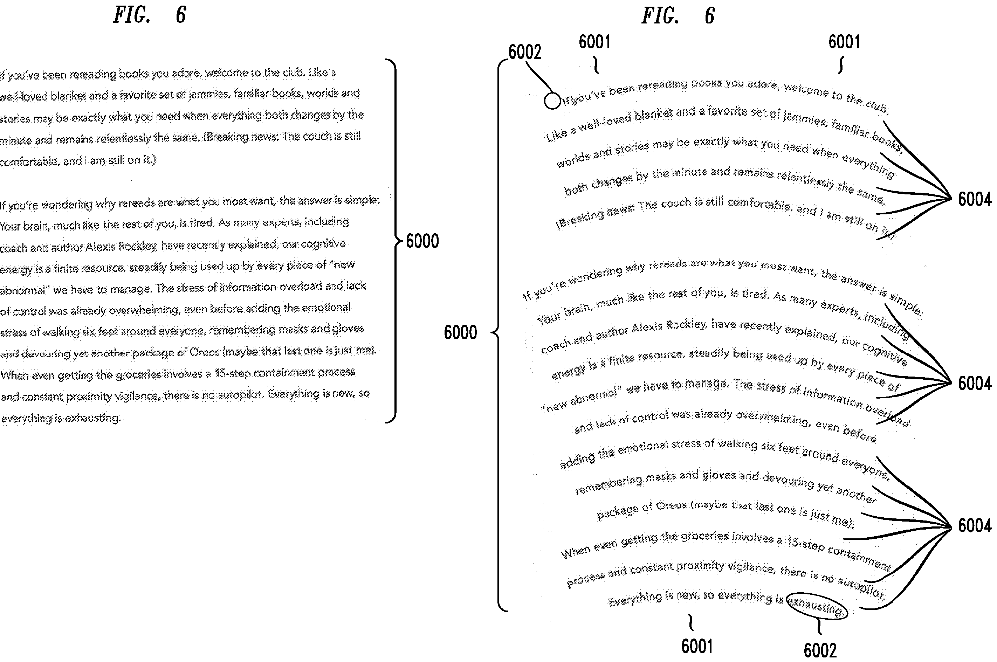

Referring now to Figure 5 there is depicted a simplified block diagram of a technique for providing inventive dyslexic readable images in a non-linear format to substantially improve the ability of a dyslexic to read and comprehend the so provided images. As depicted, the method may include the use of two dimensional, linear text, letter, symbol, word, sentence or phrase (collectively "information"; e.g., see Figure 6A) that may take the form of, for example, a document 503a (e.g., scanned document), stored electronic data 503a (e.g., from an electronic device such as a memory "thumb drive" or hard drive) in a linear image format that is input into a local electronic device 503b. Alternatively, the linear image formatted information may be manually input using a keyboard or touchscreen 503a, for example that is part of, or attached to, the local device 503b. In a first embodiment the local device 503b may access an installed APP or stored electronic instructions, for example, and then
communicate with a remote server 500 and send the inputted information to the server 500 in electronic form (electronic signals). Upon receiving the inputted information a processor (or processors) within the server 500 may be operable to execute electronic instructions stored as electronic signals in electronic memory (either onboard 504a or separate memory 504b) for converting the received information from its linear image format to a non-linear image format that includes one or more positioned non-linear boundaries, such as that shown in Figures 1 A to 1C, 2A to 2C, 3 A to 3E. 4A to 4C, and 6B for example. Such instructions further comprise instructions on positioning the textual objects from boundaries at a first, third or fourth distances described herein, positioning the boundaries from one another at a second distance described herein, generating the non-linear boundaries themselves, generating 3-D objects, generating 3-D borders, generating a geometric shape of an image, generating one or more of grammatical letters, words, numbers, or symbols, to name some of the types of instructions. In sum, the instructions are functionally executed by the operation of the electronic processor to generate the dyslexic readable image comprising the surface or background portion, the one or more positioned non-linear boundaries, the one or more textual objects, and where the one or more textual objects are positioned on the portion such that each object is at a same first distance from the one or more positioned non-linear boundaries, for example.

In this embodiment it is assumed that the linear image formatted information originates from another medium, such as a physical book, piece of paper or the local electronic device 503b itself where the original information may be copied, transferred, scanned or manually input (collectively "input") into the local device 503b using means known in the art before the information is communicated to the server 500. The local device 503b may communicate the information and other necessary signaling via wired or wireless means with the server 500. The server 500 may be a part of the same local or Wi-Fi communications network as the local device 503b or may be located in a different communications network or domain.

In another embodiment images that include, among other features, inventive non-linear boundaries (such as those depicted in Figures 1 A to 1C, 2A to 2C, 3A to 3E and 4A to 4C, for example) may be stored (as image data) in electronic storage 504a, b and then generated by the processor within the server 500 based on executing instructions stored as electronic signals in electronic memory without the need to receive signals representing linear formatted information or images from the local device 503b or convert such linear information or images, for example. Such instructions are functionally executed by the server to generate dyslexic readable images comprising surface or background portion(s), one or more positioned non linear boundaries, one or more textual objects, where the one or more textual objects are positioned on the portion such that each object is at a same first distance from the one or more non-linear boundaries.

In yet a further embodiment, rather than send signals representing the linear image formatted information to the server 500, the local device 503b may comprise means for creating a dyslexic readable image. For example, such means may comprise an electronic receiver that is operable to receive linear formatted information, and an electronic processor operable to execute stored instructions (either onboard or separate memory; not shown in Figure 5; e.g., an APP, for example) to convert the received, linear formatted information into one or more dyslexic readable images comprising a surface or background portion, one or more positioned non-linear boundaries, one or more textual objects, where the one or more textual objects are positioned on the portion such that each object is at a same first distance from the one or more positioned non-linear boundaries. In such an embodiment the device 503b may further comprise an electronic storage device operable to store the received information and/or the images. As noted, each of the so converted non-linear images may include one or more positioned non-linear boundaries (hereafter referred to as a "nonlinear, image format" or "non-linear image") such as that shown in Figures 1 A to 1C, 2A to 2C, 3 A to 3E and 4A to 4C, for example. Alternatively, an exemplary means for creating a dyslexic readable image may comprise, for example, an electronic storage device (e.g., electronic memory) operable to store image data, and an electronic processor operable to generate dyslexic readable images from the stored image data based on executing stored instructions (e.g., an APP, for example). Such instructions may comprise instructions on positioning the textual objects from boundaries at a first, third or fourth distances described herein, positioning the boundaries from one another at a second distance described herein, generating the non-linear boundaries themselves, generating 3-D objects, generating 3-D borders,
generating a geometric shape of an image, generating one or more of grammatical letters, words, numbers, or symbols, to name some of the types of instructions. Yet further the means for creating a dyslexic readable image may comprise a physical device or medium (a device that is primarily mechanical or electro-mechanical, as opposed to electronic) comprised of one or more components as described elsewhere herein.

Continuing, once an inventive non-linear image has been generated the processor in either the local device 503b or server 500 may be further operable to execute additional, stored instructions to forward or send the so generated image to a printer 501, local printer 503b, separate electronic display 502 or to a display that is part of the local device 503b so that the converted image may be thereafter reproduced for viewing by the dyslexic. It should be understood that the electronic display 502 may be part of a larger device or system such as an electronic white board, laptop, desktop, smartphone, personal digital assistant, mobile communication terminal, media player, navigational device, electronic book, electronic notepad and other electronic devices offering access to information. Similarly, the local device 503b may also comprise an electronic display, electronic whiteboard, laptop, desktop, smartphone, personal digital assistant, mobile communication terminal, media player, navigational device, electronic book, electronic notepad and other electronic devices offering access to information.

In another embodiment, rather than generate the image using an electronic device, such as local device 503b or server 500, the image may be generated by constructing components of a physical device or medium (a device that is primarily mechanical or electro-mechanical, as opposed to electronic), where each component represents an element of a dyslexic readable, non-linear image. For example, the components of such a physical device or medium may comprise a background portion 3, positioned non-linear boundaries (i.e., curved) lines 4a to 4n (where "n" represents the last boundary) that divides the eventual image into locations, and one or more textual objects 2a-2n representing the text. It should be understood that one or more of the components need not be flat. For example, each of the boundaries 4a to n and/or textual objects 2a to 2n may be represented as, or correspond to, a raised 3D component (e.g., for a textual object, a physical rectangular block of wood, for
example) with a letter or other symbol, for example, applied to it giving the corresponding component a 3D appearance.

The composition of each of the components and the device or medium itself may comprise a type of wood, metal, vinyl or plastic, or some combination of such materials, for example. Alternatively one or more of the elements of the image 1 may be represented by a paint or similar material applied to the surface of the device or medium (e.g., for the non-linear boundaries). Regardless of the device or medium's or component's composition, in an embodiment the components corresponding to textual objects may be positioned as described previously - at a first, third or fourth distance from components corresponding to boundaries above and/or below the objects and following a positioned boundary above and/or below the object. The resulting physical device or medium may effectively, visually separate components corresponding to a word or phrase and/or elements thereof (e.g., letters) in text from another component corresponding to a word or phrase using the boundaries so that a dyslexic can read and understand the text that is represented by the components.

The component corresponding to the background portion 3 or another supporting portion of the physical device or medium may have a circumference, perimeter or edge shaped as a circle or oval to correspond to the shape of the entire image 1.

As mentioned briefly above, when the image 1 is created using such a physical device or medium it may be necessary to apply one or more elements or parts of the image 1 to individual components of the physical device or medium. For example, each of the textual objects (e.g., letters) may be individually applied/labeled to a physical component of the physical device (e.g., a letter is applied to a 3D block of wood). Thereafter, the so labeled component with its corresponding textual object may be inserted onto the surface of the physical device and positioned along a component corresponding to one of the positioned non-linear (i.e., curved) boundaries (similar to boundaries 4a to n) that have also been formed and positioned on the surface of the physical device or as a raised component so that each component corresponding to an object is at a first, third or fourth distance from components corresponding to boundaries above and/or below the objects and following a positioned boundary above and/or below the object as noted previously. The positioning of the components corresponding to textual objects from a boundary or boundaries and the positioning of the boundaries themselves effectively, visually separates a word or phrase and/or elements so represented (e.g., letters) from another word or phrase so that a dyslexic can read and understand the represented components.

Referring back to Figures 1 A to 1C, as shown image 1 includes textual objects 2a-2n representing the word "Washington" as an example. The word "Washington" may be separated and then presented in a non-linear format so that the image 1 can be readily read and understood by the dyslexic. While a single word is represented by the objects 2a to 2n in Figures 1 A to 1C, it should be understood that this is merely exemplary and more than one word may be represented by one or more of the objects 2a to 2n. Conversely, a word with fewer letters (e.g., as few as one letter) or letters that do not comprise a word (e.g., the alphabet) may represented by one or more of the objects 2a to 2n. The inventor believes that presenting a word or words using the non-linear boundaries depicted in Figures 1 A to 1C substantially improves the ability of a dyslexic to read and comprehend sentences represented by the image 1.

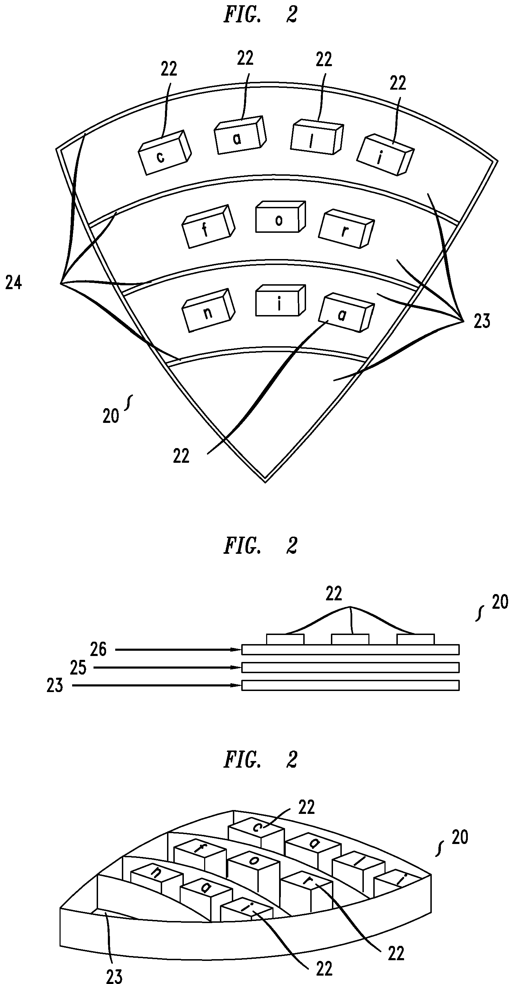

Referring now to Figures 2A to 2C there is depicted another exemplary inventive dyslexic readable image 20 generated in accordance with an embodiment of the invention. As shown the image 20 may comprise a surface or background portion 23 with positioned non-linear (i.e., curved) boundaries 24a to 24n (where "n" represents the last boundary for dividing the image into locations and one or more textual objects 22a-22n representing text positioned on the portion such that each object is at a same first distance from the one or more positioned non-linear boundaries 24a to 24n. As noted previously, the one or more objects 22a to 22n may comprise one or more grammatical letters, words, numbers, and symbols, for example (i.e., "text"). Still further, in one embodiment, each of the objects 22a to 22n (e.g., grammatical letters, words, numbers, and symbols) may comprise text presented in a block-lettering format.

In one embodiment the first distance may comprises an equal distance from the one or more positioned non-linear boundaries 24a to 24n that are located above and below the one or more objects 22a to 22n to the objects 22a to 22n. Alternatively, first distance may be an equal distance from the positioned non-linear boundaries 24a to 24n that is located above or below the one or more objects 22a to 22n to the objects 22a to 22n. Accordingly, the objects 22a to 22n may appear to "follow" the positioned non-linear boundaries 24a to 24n. By so positioning the textual objects, and the positioning of the boundaries themselves, the image 20 effectively visually separates text (e.g., a word or phrase and/or elements thereof (e.g., letters) from another word or phrase) so that a dyslexic can read and understand the text represented by the image 20. As depicted in Figures 2A and 2C the entire image 20 may be formed as a shield like image. As depicted in Figures 2A and 2C the entire image 20 may be formed as an inverted Reuleaux triangle or shield-shaped image. Accordingly, when the entire image is reproduced it may be reproduced as an inverted Reuleaux triangle or shield shaped image. Still further, the image 20 may optionally comprise a 3D border 26.

The border may appear on top of edge of the image 20. Yet further, the image may include an optional colored film 25 between the triangle/shield and the border structure if desired, for additional contrast.

Though the objects 22a to 22n maybe a first distance from each of the one or more positioned boundaries 24a to 24n, the boundaries 24a to 24n themselves may each be separated or positioned from one another by a second distance. In one embodiment, the first distance may be substantially 1/3 of the second distance. In yet another embodiment, one or more of the one or more positioned boundaries 24a to 24n may be located above or below each of the one or more objects 22a to 22n at a third distance from each of the one or more objects 22a to 22n, while another one of the one or more positioned boundaries may be located below or above the one or more objects and is at a fourth distance, where the third and fourth distances maybe different from each other and may vary from a second distance by up to 10%.

Alternatively, the third and fourth distances may be the same distance. Though the exemplary images shown in the figures depict continuous positioned boundaries it should be understood that the boundaries may comprise one or more undulations.

The image 20 may be generated using similar methods as the images in Figures 1 A to 1C using the processor in server 500, the various means for creating a dyslexic readable image in local device 503b described previously (including using the types of electronically stored instructions previously described) or by creating a physical device or medium with the understanding that the means for creating a
dyslexic image may comprise one or more processors operable to execute instructions stored as electronic signals in electronic memory (either onboard or separate memory) for converting text from a linear image format to an non-linear, dyslexic readable image 20 that includes one or more positioned non-linear boundaries formed as inverted Reuleaux triangle or shield shape 20, or alternatively, generating the image 20 formed as an inverted Reuleaux triangle or shield shape based on images (image data) stored in memory 504a, 504b, for example.

Further, once the inventive image 20 has been generated a processor in either the local device 503b or server 500 may be further operable to execute additional, stored instructions to control the forwarding or sending of the so generated image to a printer 501, local printer 503b, separate display 502 or to a display that is part of the local device 503b so that the converted image may be thereafter reproduced for viewing by the dyslexic.

As with the images in Figures 1 A to 1C, the image 20 may be generated by constructing components of a physical device or medium (a device that is primarily mechanical or electro-mechanical, as opposed to electronic), where each component represents an element of the image. For example, the components of such a physical device or medium may comprise components corresponding to background portion 23, positioned non-linear (i.e., curved) boundaries 24a to 24n (where "n" represents the last boundary) that divides the eventual image into locations, and one or more textual objects 22a-22n representing text. It should be understood that one or more of the components need not be flat. For example, each of the positioned boundaries 24a to 24n or textual objects 22a to 22n may comprise a raised 3D component (e.g., for a textual object, a physical rectangular block of wood, for example) with a letter or other symbol, for example, applied to it giving the component a 3D appearance.

The composition of each of the components and the device or medium itself may again comprise a type of wood, metal, vinyl or plastic, or some combination of such materials, for example. Alternatively one or more of the elements of the image 20 may be a paint or similar material applied to the surface of the device or medium (e.g., for the non-linear boundaries). Regardless of the device or medium's or component's composition, in an embodiment the components corresponding to textual objects 22a to 22n may be positioned as described previously - at a first, third or fourth distance from components corresponding to positioned boundaries above and/or below the objects and following a boundary above and/or below the object.

The resulting physical device or medium may effectively, visually separate components corresponding to a word or phrase and/or elements thereof (e.g., letters) in text from another component corresponding to a word or phrase using the positioned boundaries so that a dyslexic can read and understand the text that is represented by the components.

The component corresponding to the background section 23 or another supporting section of the physical device or medium may have a perimeter or edge shaped as an inverted Reuleaux triangle or shield to correspond to the shape of the image 20.

When the image 20 is created using such a physical device or medium it may be necessary to apply one or more elements or parts of the image 20 to individual components of the physical device. For example, each of the textual objects (e.g., letters) 22a to 22n may be individually applied/labeled to a physical component of the physical device or medium (e.g., a letter is applied to a 3D block of wood).

Thereafter, the so labeled component with its corresponding textual object may be inserted onto the surface of the physical device and positioned along one of the positioned non-linear (i.e., curved) boundaries (similar to lines 24a to 24n) that have also been positioned or formed on the surface of the physical device or as a raised component so that each component corresponding to an object is at a first, third or fourth distance from components corresponding to positioned boundaries above and/or below the objects and following a boundary above and/or below the object as noted previously. The positioning of the components corresponding to textual objects 22a to 22n from, and/or along, a boundary or boundaries and the positioning of the boundaries themselves effectively, visually separates a word or phrase and/or elements so represented (e.g., letters) in text from another word or phrase so that a dyslexic can read and understand the text based on the components.

Referring back to Figures 2A to 2C, as shown image 20 includes textual objects 24a-24n representing the word "California" as an example. As shown, the word "California" is separated and presented in a non-linear format that can be readily read and understood by the dyslexic. While a single word is represented by the objects 24a to 24n in Figure 2, it should be understood that this is merely exemplary and more than one word may be represented by the objects 24a to 24n. Conversely, a word with fewer letters (e.g., as few as one letter) or letters that do not comprise a word (e.g., the alphabet) may represented by the objects 24a to 24n. The inventor believes that presenting a word or words from, and/or along a positioned boundary or boundaries depicted in Figures 2A to 2C substantially improves the ability of a dyslexic to read and comprehend individual words.

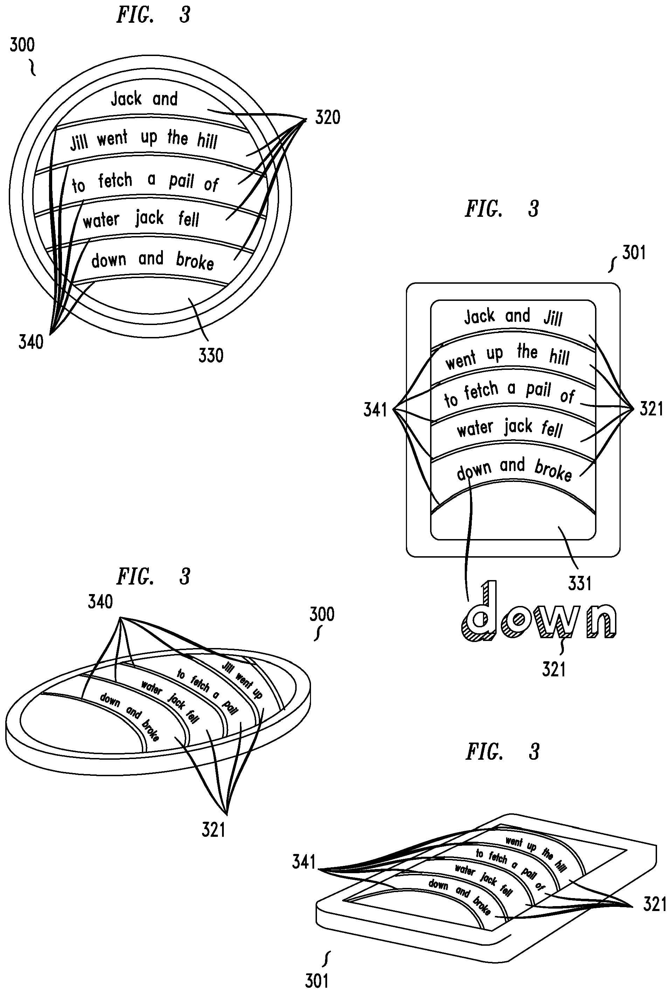

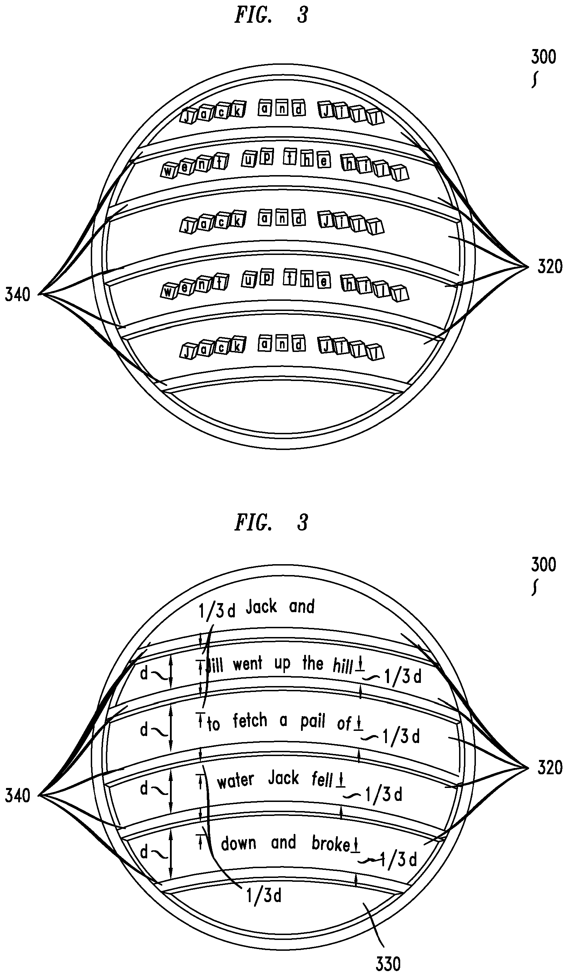

Referring now to Figures 3 A to 3F there are depicted additional exemplary inventive images 300,301 generated in accordance with an embodiment of the invention. As shown images 300,301 may comprise a surface or background portion 330,331 respectively with positioned non-linear (i.e., curved) boundaries 340a-340n, 341a-341n, respectively, for dividing the image into locations and one or more textual objects 320a-320n, 321a-321n (e.g., see Figure 3E for a presentation of 3D objects), respectively, positioned on the portion such that each object is at a same first distance from the one or more positioned non-linear boundaries 340a-340n, 341a-341n. As noted previously, the one or more objects 320a-320n, 321a-321n may comprise one or more grammatical letters, words, numbers, and symbols, for example (i.e., "text").

Still further, in one embodiment, each of the objects 320a-320n, 321a-321n (e.g., grammatical letters, words, numbers, and symbols) may comprise text presented in a block-lettering format.

In one embodiment the first distance may comprises an equal distance from the one or more positioned non-linear boundaries 340a-340n, 341a-341n that are located above and below the one or more objects 320a-320n, 321a-321n to the objects 320a-320n, 321a-321n. Alternatively, first distance may be an equal distance from the positioned non-linear boundaries 340a-340n, 341a-341n that is located above or below the one or more objects 320a-320n, 321a-321n to the objects 320a-320n, 321a-321n. Accordingly, the objects 320a-320n, 321a-321n may appear to "follow" the positioned non-linear boundaries 340a-340n, 341a-341n. By so positioning the textual objects, the images 300,301 and the positioning of the boundaries themselves effectively visually separates text (e.g., a word or phrase and/or elements thereof (e.g., letters) from another word or phrase) so that a dyslexic can read and understand the text represented by the images 300,301.

Though the objects 320a-320n, 321a-321n may be a first distance from each of the one or more positioned boundaries 340a-340n, 341a-341n, the boundaries 340a-340n, 341a-341n themselves may each be separated or positioned from one another by a second distance. In one embodiment, the first distance may be substantially 1/3 of the second distance. In yet another embodiment, one or more of the one or more positioned boundaries 340a-340n, 341a-341n may be located or positioned above or below each of the one or more objects 320a-320n, 321a-321n at a third distance from each of the one or more objects 320a-320n, 321a-321n, while another one of the one or more boundaries may be located or positioned below or above the one or more objects and is at a fourth distance, where the third and fourth distances maybe different from each other and may vary from a second distance by up to 10%.

Alternatively, the third and fourth distances may be the same distance. Though the exemplary images shown in the figures depict continuous positioned boundaries it should be understood that the boundaries may comprise one or more undulations.

As depicted in Figures 3A to 3E an entire image 300,301 may be formed as a circular/oval 300 or rectangle 301. Accordingly, when the entire image 300,301 is reproduced it may be reproduced as a circular/oval or as a rectangular.

The images 300,301 may be generated using similar methods as the images in Figures 1 A to 1C and 2A to 2C using the processor in server 500, the various means for creating a dyslexic readable image in local device 503b described previously (including using the types of electronically stored instructions previously described), or by creating a physical device or medium with the understanding that the means for creating a dyslexic image may comprise one or more processors operable to execute instructions stored as electronic signals in electronic memory (either onboard or separate memory) for converting text from a linear image format to an non-linear, dyslexic readable image 300, 301 that includes one or more positioned non-linear boundaries formed as circular or rectangular shapes, or alternatively, generating the images 300.301 formed as circular or rectangular shapes based on images (image data) stored in memory 504a, 504b, for example.

Further, once the inventive images 300,301 have been generated a processor in either the local device 503b or server 500 may be further operable to execute additional, stored instructions to control the forwarding or sending of the so generated image to a printer 501, local printer 503b, separate display 502 or to a display that is part of the local device 503b so that the converted image may be thereafter reproduced for viewing by the dyslexic.

As with the images in Figures 1 A to 1C and 2A to 2C, the images 300, 301 may be generated by constructing components of a physical device or medium (a device that is primarily mechanical or electro-mechanical, as opposed to electronic), where each component represents an element of the image 300 or 301. For example, the components of such a physical device or medium may comprise components corresponding to a background portion 330 or 331, positioned non-linear (i.e., curved) boundaries 340a to 340n or 341a to 341n (where "n" represents the last line/boundary) that divides the eventual image into locations, and one or more textual objects 320a-320n or 321a to 321n representing the text. It should be understood that one or more of the components need not be flat. For example, each of the boundaries 340a to 340n or 341a to 341n or textual objects 320a to 320n or 321a to 321n may comprise a raised 3D component (e.g., for a textual object, a physical rectangular block of wood, for example) with a letter or other symbol, for example, applied to it giving the component a 3D appearance.

The composition of each of the components and the device or medium itself may again be a type of wood, metal, vinyl or plastic, or some combination of such materials, for example. Alternatively one or more of the elements or parts of an image may be a paint or similar material applied to the surface of the device or medium (e.g., for the non-linear lines). Regardless of the device's or medium's or component's composition, in an embodiment the components corresponding to textual objects 320a to 320n or 321a to 321n n may be positioned as described previously - at a first, third or fourth distance from components corresponding to positioned boundaries above and/or below the objects and following a positioned boundary above and/or below the object. The one or more positioned, non-linear curved boundaries of images 300 or 301 represented by the components of the physical device or medium may effectively, visually separate a word or phrase and/or elements thereof (e.g., letters) in text from another word or phrase so that a dyslexic can read and understand the text represented by components of image 300 or 301.

The component corresponding to the background section 330 or 331 or another supporting section of the physical device or medium may have a perimeter or edge shaped as a circle/oval or rectangle to correspond to the shape of the image 300 or 301.

When an image 300 or 301 is created using such a physical device or medium it may be necessary to apply one or more elements or parts of an image 300 or 301 to individual components of the physical device or medium. For example, each of the textual objects (e.g., letters, words, sentences) 320a to 320n or 321a to 32 In may be individually applied/labeled to a physical component of the physical medium or device (e.g., a letter or word is applied to a 3D block of wood; see Figure 3E).

Thereafter, the so labeled component with its corresponding textual object may be inserted onto the surface of the physical device or medium and positioned along one of the positioned non-linear (i.e., curved) boundaries (similar to boundaries 340a to 340n or 341a to 341n) that have also been formed or positioned on the surface of the physical device or medium (e.g., painted on) or as a raised component so that each component corresponding to an object is at a first, third or fourth distance from components corresponding to boundaries above and/or below the objects and following a boundary above and/or below the object as noted previously. The positioning of the components corresponding to textual objects 320a to 320n or 321a to 321n from, and/or along a boundary or boundaries and the positioning of the boundaries themselves effectively, visually separates a word or phrase and/or elements so represented (e.g., letters) in text from another word or phrase so that a dyslexic can read and understand the text represented by the components.

Referring now to Figure 3F there is depicted an enlarged view of exemplary objects 320a-320n and exemplary positioned boundaries 340a-340n. In an embodiment, a preferred positioning of objects 320a-320n is such that each of the objects is a first distance that is equidistant from a positioned boundary 340a-340n, where the first distance is 1/3d, where "d' is the second distance between boundaries 340a-340n, from each curved boundary positioned above and below the object and follows a curved boundary 340a-340n positioned below the object. In this embodiment the second distance is the total distance between two boundaries. It should be understood that this positioning may be applied to each of the inventive images described herein and covered by the inventive ideas.

Further, separately, in an embodiment, a preferred positioning of objects 320a-320n is such that each of the objects 320a-320n is a first distance 1/2d, where "d' is the second distance between positioned boundaries 340a-340n, from another object 320a-320n and follows a curved boundary 340a-340n positioned below the object. Again, in this embodiment the second distance is the total distance between two boundaries 340a-340n.

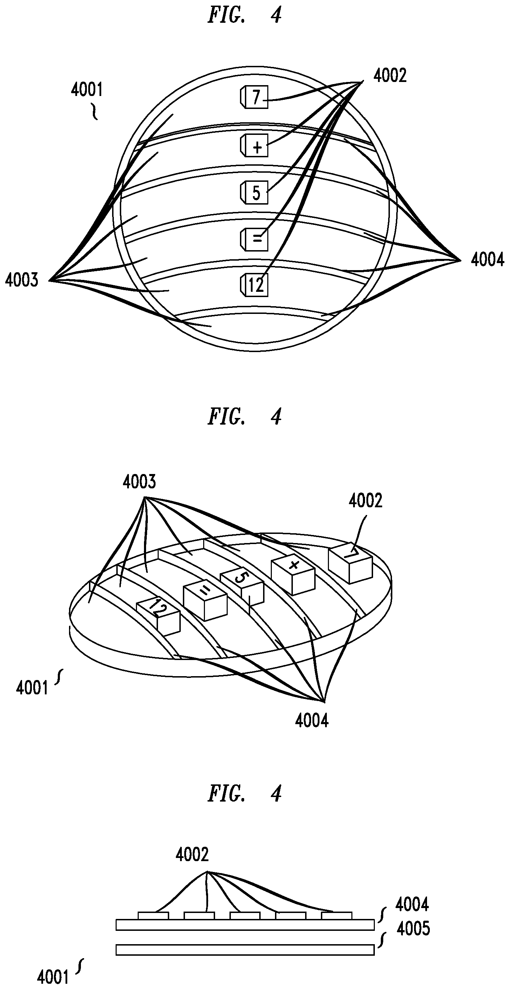

Referring now to Figures 4A to 4C there is depicted another exemplary inventive image 4001 generated in accordance with an embodiment of the invention. As shown image 4001 may comprise a surface or background portion 4003 respectively with positioned non-linear (i.e., curved) boundaries 4004a-4004n for dividing the image into locations and one or more textual objects 4002a-4002n (e.g., 3-D objects) representing text positioned in such locations where the text is positioned on the portion such that each object is at a same first distance from the one or more positioned non-linear boundaries 4004a-4004n. In this embodiment the text comprises mathematical numbers, symbols or operators, for example. By so positioning the textual objects from, and/or along a positioned boundary or boundaries, the image 4001 effectively, visually separates a mathematical number, symbol or operator from another a mathematical number, symbol or operator so that a dyslexic can read and understand the mathematical number, symbol or operator, for example, represented by the image 4001.

Still further, the image 4001 may optionally comprise a 3D border 4004a to 4004n that corresponds to the circle/oval shape of the image 4001. The border may appear on top of edge of the image 4001.

In one embodiment the first distance may comprises an equal distance from the one or more positioned non-linear boundaries 4004a-4004n that are located above and below the one or more objects 4002a-4002n to the objects 4002a-4002n.

Alternatively, first distance may be an equal distance from the positioned non-linear boundaries 4004a-4004n that is located above or below the one or more objects 4002a-4002n to the objects 4002a-4002n. Accordingly, the objects 4002a-4002n may appear to "follow" the positioned non-linear boundaries 4004a-4004n. By so positioning the textual objects and the positioning of the boundaries themselves, the image 4001 effectively visually separates text (e.g., a number, symbol and/or elements thereof) from other text so that a dyslexic can read and understand the text represented by the image 4001.

Though the objects 4002a-4002n may be a first distance from each of the one or more positioned boundaries 4004a-4004n, the boundaries 4004a-4004n themselves may each be separated or positioned from one another by a second distance. In one embodiment, the first distance may be substantially 1/3 of the second distance. In yet another embodiment, one or more of the one or more positioned boundaries 4004a-4004n may be located above or below each of the one or more objects 4002a-4002n at a third distance from each of the one or more objects 4002a-4002n, while another one of the one or more positioned boundaries is located below or above the one or more objects and is at a fourth distance, where the third and fourth distances maybe different from each other and may vary from a second distance by up to 10%.

Alternatively, the third and fourth distances may be the same distance. Though the exemplary images shown in the figures depict continuous positioned boundaries it should be understood that the boundaries may comprise one or more undulations.

The image 4001 may be generated using similar methods as the images in Figures 1 A to 1C, 2A to 2C and 3A to 3E using the processor in server 500, the various means for creating a dyslexic readable image in local device 503b described previously (including using the types of electronically stored instructions previously described), or by creating a physical device or medium with the understanding that the means for creating a dyslexic image may comprise one or more processors operable to execute instructions stored as electronic signals in electronic memory (either onboard or separate memory) for converting text from a linear image format to an non-linear, dyslexic readable image 4001 that includes one or more positioned non-linear boundaries formed as a circular shape, or alternatively, generating the image 4001 formed as a circular shapes based on images (image data) stored in memory 504a, 504b, for example.

Further, once the inventive image 4001 has been generated a processor in either the local device 503b or server 500 may be further operable to execute additional, stored instructions to control the forwarding or sending of the so generated image to a printer 501, local printer 503b, separate display 502 or to a display that is part of the local device 503b so that the converted image may be thereafter reproduced for viewing by the dyslexic.

As with the images in Figures 1 A to 1C, 2A to 2C and 3A to 3E, the image 4001 may be generated by constructing components of a physical device or medium (a device that is primarily mechanical or electro-mechanical, as opposed to electronic), where each component represents an element or part of the image 4001. For example, the components of such a physical device or medium may comprise components corresponding to a background portion 4003, positioned non-linear (i.e., curved) boundaries 4004a to 4004n (where "n" represents the last boundary) that divides the eventual image into locations, and one or more textual objects 4002a-4002n representing the text. It should be understood that one or more of the components need not be flat. For example, each of the components representing positioned boundaries 4004a to 4004n or textual objects 4002a to 4002n may comprise a raised 3D component (e.g., for a textual object, a physical rectangular block of wood, for example) with a number, symbol, or operator for example, applied to it giving the component a 3D appearance.

The composition of each of the components and the device or medium itself may again be a type of wood, metal, vinyl or plastic, or some combination of such materials, for example. Alternatively one or more of the elements or parts of the image 4001 may be a paint or similar material applied to the surface of the device or medium (e.g., for the positioned non-linear boundaries). Regardless of the device's or medium's or component's composition, in an embodiment the components corresponding to the textual objects 4002a to 4002n are positioned as described previously - at a first, third or fourth distance from components corresponding to positioned boundaries above and/or below the objects and following a boundary above and/or below the object. The so positioned components from, and/or along a boundary or boundaries effectively, visually separate a number, symbol, or operator and/or elements thereof from another a number, symbol, or operator so that a dyslexic can read and understand the text (e.g., equation) based on the components.

The component corresponding to the background section 4003 or another supporting section of the physical device or medium may have a perimeter or edge shaped a circle/oval to correspond to the shape of the image 4001.

When the image 4001 is created using such a physical device or medium it may be necessary to apply one or more elements or parts of the image 4001 to individual components of the physical device or medium. For example, each of the textual objects (e.g., numbers, symbols, operators) 4002a to 4002n may be individually applied/labeled to a physical component of the physical device or medium (e.g., a number, symbol, operator is applied to a 3D block of wood).

Thereafter, the so labeled component with its corresponding textual object may be inserted onto the surface of the physical device or medium and positioned along one of the positioned non-linear (i.e., curved) boundaries (similar to lines 4004a to 4004n) that have also been formed or positioned on the surface of the physical device or medium (e.g., painted on) or as a raised component so that each component is at a first, third or fourth distance from components corresponding to boundaries above and/or below the objects and following a boundary above and/or below the object as noted previously. The positioning of the components corresponding to textual objects 4002a to 4002n from, and/or along a boundary or boundaries and the positioning of the boundaries themselves effectively, visually separates a number, symbol or operator and/or elements thereof so represented from another number, symbol or operator so that a dyslexic can read and understand the text represented based on the components. Each of the components corresponding to textual objects 4002a to 4002n may include means for magnetically attaching the component to the surface 4003.

Referring now to Figures 6A and 6B there is depicted an exemplary example of the conversion of linear formatted text 6000a (e.g., sentences) shown in Figure 6A into a non-linear formatted dyslexic readable image 6000b in Figure 6B in accordance with the inventive methods and devices described herein (including, but not limited to, using the types of electronically stored instructions previously described), where the image 6000b comprises a surface or background portion 6001 comprising one or more positioned non-linear boundaries 6004a-6004n (where "n" represents the last boundary), one or more textual objects 6002a-6002n (where "n" represents the last object), and where the one or more textual objects 6002a-6002n are positioned on the portion 6001 such that each object is at a same first distance from the one or more positioned non-linear boundaries 6004a-6004n, for example.

## Claims

1. A method for providing a dyslexic readable image (1, 20, 300, 301, 4001, 6000b) comprising:
creating a dyslexic readable image (1, 20, 300, 301, 4001, 6000b) out of a plurality of textual objects (2a to 2n, 22a to 22n, 320a to 320n, 321a to 321n, 4002a to 4002n, 6002a to 6002n) using a device including an electronic processor and an electronic storage device in which the plurality of textual objects (2a to 2n, 22a to 22n, 320a to 320n, 321a to 321n, 4002a to 4002n, 6002a to 6002n) is stored, and forwarding the created image (1, 20, 300, 301, 4001, 6000b) to a reproducing device (501, 502, 503b), wherein the created image (1, 20, 300, 301, 4001, 6000b) comprises,
(i) a surface or background portion (3, 23, 330, 331, 4003, 6001) comprising a plurality of positioned non-linear boundaries (4a to 4n, 24a to 24n, 340a to 340n, 341a to 341n, 4004a to 4004n, 6004a to 6004n),
(ii) one or more of the textual objects (2a to 2n, 22a to 22n, 320a to 320n, 321a to 321n, 4002a to 4002n, 6002a to 6002n), and
(iii) textual locations in which the image (1, 20, 300, 301, 4001, 6000b) is divided by the non-linear boundaries (4a to 4n, 24a to 24n, 340a to 340n, 341a to 341n, 4004a to 4004n, 6004a to 6004n), wherein
the one or more textual objects (2a to 2n, 22a to 22n, 320a to 320n, 321a to 321n, 4002a to 4002n, 6002a to 6002n) are positioned such that
each textual object (2a to 2n, 22a to 22n, 320a to 320n, 321a to 321n, 4002a to 4002n, 6002a to 6002n) is at a same first distance from the positioned non-linear boundaries (4a to 4n, 24a to 24n, 340a to 340n, 341a to 341n, 4004a to 4004n, 6004a to 6004n) that are located above or below the one or more textual objects (2a to 2n, 22a to 22n, 320a to 320n, 321a to 321n, 4002a to 4002n, 6002a to 6002n), wherein the non-linear boundaries (4a to 4n, 24a to 24n, 340a to 340n, 341a to 341n, 4004a to 4004n, 6004a to 6004n) are separated at a second distance, or
textual objects (2a to 2n, 22a to 22n, 320a to 320n, 321a to 321n, 4002a to 4002n, 6002a to 6002n) are at a same third distance from the positioned non-linear boundary (4a to 4n, 24a to 24n, 340a to 340n, 341a to 341n, 4004a to 4004n, 6004a to 6004n) above or below the one or more textual objects (2a to 2n, 22a to 22n, 320a to 320n, 321a to 321n, 4002a to 4002n, 6002a to 6002n) and textual objects (2a to 2n, 22a to 22n, 320a to 320n, 321a to 321n, 4002a to 4002n, 6002a to 6002n) are at a same fourth distance from another positioned non-linear boundary (4a to 4n, 24a to 24n, 340a to 340n, 341a to 341n, 4004a to 4004n, 6004a to 6004n) below or above the one or more textual objects (2a to 2n, 22a to 22n, 320a to 320n, 321a to 321n, 4002a to 4002n, 6002a to 6002n), wherein the non-linear boundaries (4a to 4n, 24a to 24n, 340a to 340n, 341a to 341n, 4004a to 4004n, 6004a to 6004n) are separated at the second distance.

2. The method as in claim 1 wherein the one or more objects further comprise three dimensional (3D) objects.

3. The method as in claim 1 wherein the first distance is substantially 1/3 of the second distance.

4. The method as in claim 1 wherein the third and fourth distances vary from a second distance by up to 10%.

5. The method as in claim 1 wherein each of the one or more positioned non-linear boundaries (4a to 4n, 24a to 24n, 340a to 340n, 341a to 341n, 4004a to 4004n, 6004a to 6004n) comprise a curved line.

6. The method as in claim 1 where the one or more objects may comprise one or more of grammatical letters, words, numbers, and symbols.

7. The method as in claim 1 wherein the device comprises an electronic display (502, 503b) as the reproducing device.

8. A device for providing a dyslexic readable image (1, 20, 300, 301, 4001, 6000b) comprising:
an electronic storage device operable to store image data; and an electronic processor operable to generate the dyslexic readable image (1, 20, 300, 301, 4001, 6000b) from the stored image data based on executing stored instructions, wherein the device is capable of performing the method of claims 1 to 7.

9. The device as in claim 9 further comprising:
a receiver that receives linear formatted information, wherein the electronic processor is further operable to execute stored instructions to convert the received, linear formatted information into one or more dyslexic readable images (1, 20, 300, 301, 4001, 6000b), and
an electronic storage device operable to store the received information or the one or more dyslexic readable images (1, 20, 300, 301, 4001, 6000b).

10. The device as in claim 9 wherein the device further comprises an electronic server (500), electronic white board, laptop computer, desktop computer, smartphone, electronic personal digital assistant, electronic mobile communication terminal, electronic media player, electronic navigational device, electronic book, or electronic notepad.

## Patentansprüche

1. Verfahren zum Bereitstellen eines durch Legastheniker lesbaren Bildes (1, 20, 300, 301, 4001, 6000b), mit folgenden Schritten:
Erzeugen eines durch Legastheniker lesbaren Bildes (1, 20, 300, 301, 4001, 6000b) aus einer Mehrzahl an Textobjekten (2a bis 2n, 22a bis 22n, 320a bis 320n, 321a bis 321n, 4002a bis 4002n, 6002a bis 6002n) unter Verwendung einer Vorrichtung, die einen elektronischen Prozessor und eine elektronische Speichervorrichtung beinhaltet, in der die Mehrzahl an Textobjekten (2a bis 2n, 22a bis 22n, 320a bis 320n, 321a bis 321n, 4002a bis 4002n, 6002a bis 6002n) gespeichert ist, und Weiterleiten des erzeugten Bildes (1, 20, 300, 301, 4001, 6000b) an eine Wiedergabevorrichtung (501, 502, 503b), wobei das erzeugte Bild (1, 20, 300, 301, 4001, 6000b) aufweist:
(i) einen Oberflächen- oder Hintergrundabschnitt (3, 23, 330, 331, 4003, 6001), aufweisend eine Mehrzahl an positionierten, nichtlinearen Grenzen (4a bis 4n, 24a bis 24n, 340a bis 340n, 341a bis 341n, 4004a bis 4004n, 6004a bis 6004n),
(ii) eines oder mehrere der Textobjekte (2a bis 2n, 22a bis 22n, 320a bis 320n, 321a bis 321n, 4002a bis 4002n, 6002a bis 6002n), und
(iii) Textorte, an denen das Bild (1, 20, 300, 301, 4001, 6000b) durch die nichtlinearen Grenzen (4a bis 4n, 24a bis 24n, 340a bis 340n, 341a bis 341n, 4004a bis 4004n, 6004a bis 6004n) getrennt wird, wobei
das eine oder die mehreren Textobjekte (2a bis 2n, 22a bis 22n, 320a bis 320n, 321a bis 321n, 4002a bis 4002n, 6002a bis 6002n) so positioniert sind, dass
jedes Textobjekt (2a bis 2n, 22a bis 22n, 320a bis 320n, 321a bis 321n, 4002a bis 4002n, 6002a bis 6002n) sich eine selbe Entfernung von den positionierten, nichtlinearen Grenzen (4a bis 4n, 24a bis 24n, 340a bis 340n, 341a bis 341n, 4004a bis 4004n, 6004a bis 6004n) entfernt befindet, die sich ober- oder unterhalb des einen oder der mehreren Textobjekte (2a bis 2n, 22a bis 22n, 320a bis 320n, 321a bis 321n, 4002a bis 4002n, 6002a bis 6002n) befinden, wobei die nichtlinearen Grenzen (4a bis 4n, 24a bis 24n, 340a bis 340n, 341a bis 341n, 4004a bis 4004n, 6004a bis 6004n) in einer zweiten Entfernung getrennt sind, oder
Textobjekte (2a bis 2n, 22a bis 22n, 320a bis 320n, 321a bis 321n, 4002a bis 4002n, 6002a bis 6002n) sich in einer selben dritten Entfernung von der positionierten, nichtlinearen Grenze (4a bis 4n, 24a bis 24n, 340a bis 340n, 341a bis 341n, 4004a bis 4004n, 6004a bis 6004n) ober- oder unterhalb des einen oder der mehreren Textobjekte (2a bis 2n, 22a bis 22n, 320a bis 320n, 321a bis 321n, 4002a bis 4002n, 6002a bis 6002n) entfernt befinden und Textobjekte (2a bis 2n, 22a bis 22n, 320a bis 320n, 321a bis 321n, 4002a bis 4002n, 6002a bis 6002n) sich in einer selben vierten Entfernung von einer weiteren positionierten, nichtlinearen Grenze (4a bis 4n, 24a bis 24n, 340a bis 340n, 341a bis 341n, 4004a bis 4004n, 6004a bis 6004n) unter- oder oberhalb des einen oder der mehreren Textobjekte (2a bis 2n, 22a bis 22n, 320a bis 320n, 321a bis 321n, 4002a bis 4002n, 6002a bis 6002n) entfernt befinden, wobei die nichtlinearen Grenzen (4a bis 4n, 24a bis 24n, 340a bis 340n, 341a bis 341n, 4004a bis 4004n, 6004a bis 6004n) in der zweiten Entfernung getrennt sind.

2. Verfahren nach Anspruch 1, wobei das eine oder die mehreren Objekte ferner dreidimensionale (3D) Objekte aufweisen.

3. Verfahren nach Anspruch 1, wobei die erste Entfernung im Wesentlichen 1/3 der zweiten Entfernung beträgt.

4. Verfahren nach Anspruch 1, wobei die dritten und vierten Entfernungen von einer zweiten Entfernung um bis zu 10 % abweichen.

5. Verfahren nach Anspruch 1, wobei jede von der einen oder den mehreren positionierten, nichtlinearen Grenzen (4a bis 4n, 24a bis 24n, 340a bis 340n, 341a bis 341n, 4004a bis 4004n, 6004a bis 6004n) eine gekrümmte Linie aufweist.

6. Verfahren nach Anspruch 1, wobei das eine oder die mehreren Objekte einen oder mehrere grammatikalische Buchstaben, Wörter, Zahlen und Symbole aufweisen können.

7. Verfahren nach Anspruch 1, wobei die Vorrichtung eine elektronische Anzeige (502, 503b) als die Wiedergabevorrichtung aufweist.

8. Vorrichtung zum Bereitstellen eines durch Legastheniker lesbaren Bildes (1, 20, 300, 301, 4001, 6000b), mit:
einer elektronischen Speichervorrichtung, die dazu dient, Bilddaten zu speichern; und
einen elektronischen Prozessor, der dazu dient, aus den gespeicherten Bilddaten auf Basis der Ausführung gespeicherter Befehle das durch Legastheniker lesbare Bild (1, 20, 300, 301, 4001, 6000b) zu erzeugen, wobei die Vorrichtung in der Lage ist, das Verfahren nach den Ansprüchen 1 bis 7 durchzuführen.

9. Vorrichtung nach Anspruch 9, ferner mit:
einem Empfänger, der lineare, formatierte Informationen empfängt, wobei der elektronische Prozessor ferner dazu dient, gespeicherte Befehle auszuführen, um die empfangenen, linear formatierten Informationen in ein oder mehrere durch Legastheniker lesbare Bilder (1, 20, 300, 301, 4001, 6000b) zu konvertieren, und
einer elektronischen Speichervorrichtung, die dazu dient, die empfangenen Informationen oder das eine oder die mehreren durch Legastheniker lesbaren Bilder (1, 20, 300, 301, 4001, 6000b) zu speichern.

10. Vorrichtung nach Anspruch 9, wobei die Vorrichtung ferner einen elektronischen Server (500), ein elektronisches Whiteboard, einen Laptop-Computer, einen Desktop-Computer, ein Smartphone, einen elektronischen PDA, ein elektronisches mobiles Kommunikationsendgerät, einen elektronischen Medienplayer, eine elektronische Navigationsvorrichtung, ein E-Book oder ein elektronisches Notepad aufweist.

## Revendications

1. Méthode pour fournir une image lisible par les dyslexiques (1, 20, 300, 301, 4001, 6000b) comprenant :
créer une image lisible par les dyslexiques (1, 20, 300, 301, 4001, 6000b) à partir d'une pluralité d'objets textuels (2a à 2n, 22a à 22n, 320a à 320n, 321a à 321n, 4002a à 4002n, 6002a à 6002n) à l'aide d'un dispositif comprenant un processeur électronique et un dispositif de stockage électronique dans lequel la pluralité d'objets textuels (2a à 2n, 22a à 22n, 320a à 320n, 321a à 321n, 4002a à 4002n, 6002a à 6002n) est stockée, et en transmettant l'image créée (1, 20, 300, 301, 4001, 6000b) à un dispositif de reproduction (501, 502, 503b), dans lequel l'image créée (1, 20, 300, 301, 4001, 6000b) comprend,
(i) une surface ou une partie de fond (3, 23, 330, 331, 4003, 6001) comprenant une pluralité de limites non linéaires positionnées (4a à 4n, 24a à 24n, 340a à 340n, 341a à 341n, 4004a à 4004n, 6004a à 6004n),
(ii) un ou plusieurs objets textuels (2a à 2n, 22a à 22n, 320a à 320n, 321a à 321n, 4002a à 4002n, 6002a à 6002n), et
(iii) les emplacements textuels dans lesquels l'image (1, 20, 300, 301, 4001, 6000b) est divisée par les limites non linéaires (4a à 4n, 24a à 24n, 340a à 340n, 341a à 341n, 4004a à 4004n, 6004a à 6004n), dans laquelle le ou les objets textuels (2a à 2n, 22a à 22n, 320a à 320n, 321a à 321n, 4002a à 4002n, 6002a à 6002n) sont positionnés de telle sorte que
chaque objet textuel (2a à 2n, 22a à 22n, 320a à 320n, 321a à 321n, 4002a à 4002n, 6002a à 6002n) se trouve à une même première distance des limites non linéaires positionnées (4a à 4n, 24a à 24n, 340a à 340n, 341a à 341n, 4004a à 4004n, 6004a à 6004n) situées au-dessus ou au-dessous du ou des objets textuels (2a à 2n, 22a à 22n, 320a à 320n, 321a à 321n, 4002a à 4002n, 6002a à 6002n), les limites non linéaires (4a à 4n, 24a à 24n, 340a à 340n, 341a à 341n, 4004a à 4004n, 6004a à 6004n) étant séparées d'une deuxième distance, ou
les objets textuels (2a à 2n, 22a à 22n, 320a à 320n, 321a à 321n, 4002a à 4002n, 6002a à 6002n) sont à la même troisième distance de la limite non linéaire positionnée (4a à 4n, 24a à 24n, 340a à 340n, 341a à 341n, 4004a à 4004n, 6004a à 6004n), 6004a à 6004n) au-dessus ou au-dessous d'un ou de plusieurs objets textuels (2a à 2n, 22a à 22n, 320a à 320n, 321a à 321n, 4002a à 4002n, 6002a à 6002n) et d'objets textuels (2a à 2n, 22a à 22n, 320a à 320n, 321a à 321n, 4002a à 4002n, 6002a à 6002n) se trouvent à une même quatrième distance d'une autre limite non linéaire positionnée (4a à 4n, 24a à 24n, 340a à 340n, 341a à 341n, 4004a à 4004n, 6004a à 6004n) au-dessous ou au-dessus d'un ou de plusieurs objets textuels (2a à 2n, 22a à 22n, 320a à 320n, 321a à 321n, 4002a à 4002n, 6002a à 6002n), les limites non linéaires (4a à 4n, 24a à 24n, 340a à 340n, 341a à 341n, 4004a à 4004n, 6004a à 6004n) étant séparées par la deuxième distance.

2. La méthode selon la revendication 1, dans laquelle le ou les objets comprennent en outre des objets tridimensionnels (3D).

3. La méthode selon la revendication 1, dans laquelle la première distance est sensiblement égale à 1/3 de la deuxième distance.

4. La méthode selon la revendication 1, dans laquelle la troisième distance et la quatrième distance varient d'une deuxième distance jusqu'à 10 %.

5. La méthode selon la revendication 1, dans laquelle chacune des limites non linéaires positionnées (4a à 4n, 24a à 24n, 340a à 340n, 341a à 341n, 4004a à 4004n, 6004a à 6004n) comprend une ligne courbe.

6. La méthode selon la revendication 1, dans laquelle un ou plusieurs objets peuvent comprendre une ou plusieurs lettres grammaticales, des mots, des chiffres et des symboles.

7. La méthode selon la revendication 1, dans laquelle le dispositif comprend un écran électronique (502, 503b) en tant que dispositif de reproduction.

8. Dispositif permettant de fournir une image lisible par les dyslexiques (1, 20, 300, 301, 4001, 6000b) comprenant :
un dispositif de stockage électronique capable de stocker des données d'image ; et
un processeur électronique capable de générer l'image lisible par les dyslexiques (1, 20, 300, 301, 4001, 6000b) à partir des données d'image stockées sur la base de l'exécution d'instructions stockées, dans lequel le dispositif est capable d'exécuter la méthode des revendications 1 à 7.

9. Le dispositif de la revendication 9 comprend en outre :
un récepteur qui reçoit des informations au format linéaire, le processeur électronique pouvant en outre exécuter des instructions stockées pour convertir les informations reçues au format linéaire en une ou plusieurs images lisibles par les dyslexiques (1, 20, 300, 301, 4001, 6000b), et
un dispositif de stockage électronique capable de stocker les informations reçues ou une ou plusieurs images lisibles par les dyslexiques (1, 20, 300, 301, 4001, 6000b).

10. Le dispositif selon la revendication 9, dans lequel le dispositif comprend en outre un serveur électronique (500), un tableau blanc électronique, un ordinateur portable, un ordinateur de bureau, un smartphone, un assistant numérique personnel électronique, un terminal de communication mobile électronique, un lecteur multimédia électronique, un dispositif de navigation électronique, un livre électronique ou un bloc-notes électronique.
